# EUROPEAN PATENT APPLICATION

(11) **EP 4 633 175 A1**
(43) Date of publication of application: **15.10.2025**
(21) Application number: 24760541.3
(22) Date of filing: 20.02.2024
(51) Int. Cl.: H04N 21/478, H04N 21/4725, H04N 21/435, H04N 21/858, H04N 21/81

(54) **DISPLAY DEVICE AND OPERATING METHOD THEREOF**

(30) Priority: 21.02.2023 KR 20230023145
(71) Applicant: Samsung Electronics Co., Ltd., Suwon-si, Gyeonggi-do 16677 (KR)
(72) Inventor: LEE, Jongin, Suwon-si, Gyeonggi-do 16677 (KR); KIM, Sehyun, Suwon-si, Gyeonggi-do 16677 (KR); SHIN, Yongwoo, Suwon-si, Gyeonggi-do 16677 (KR); CHOI, Kilsoo, Suwon-si, Gyeonggi-do 16677 (KR); PARK, Hyeeun, Suwon-si, Gyeonggi-do 16677 (KR)
(74) Representative: Walaski, Jan Filip
(86) International application number: PCT/KR2024/002188
(87) International publication number: WO 2024/177352

(57) **Abstract**

A display apparatus and a method of operating the same are provided. The display apparatus displays a first user interface including an item enabling connection to a content providing server, connects to the content providing server according to an input for selecting the item to display a second user interface provided by the content providing server, generates a media player for playing the media content received from the content providing server according to an input of requesting execution of the media content through the second user interface, obtains deep link information for accessing the media content being played back, while the media content received from the content providing server is being played back by using the generated media player, and provides a deep link item enabling direct access to the media content to the first user interface, based on the obtained deep link information.

## Description

### Technical Field

The disclosure relates to a display apparatus and a method of operating the same, and more particularly, to a display apparatus using a server and a controller, and a method of operating the display apparatus.

### Background Art

Recently, the number of game users has increased, and demand to enjoy game content via a large-screen television (TV) for game immersion has increased.

Cloud gaming refers to a game service in which main computations such as graphics processing for a game are performed in a cloud server, operation inputs from a user are transmitted from a user apparatus, such as a smartphone or a smart TV, to a server, and the user apparatus receives and displays a rendered game screen by Internet Protocol (IP)-streaming.

### Disclosure

### Technical Solution

According to an aspect of the discloser, a display apparatus includes: a display; a communication interface; a memory storing one or more instructions; and a processor operatively connected to the display and the communication interface and configured to execute the one or more instructions. The processor may be configured to execute the one or more instructions to display, on the display, a first user interface including an item enabling connection to a content providing server; based on an input for selecting the item. The processor may be configured to execute the one or more instructions to connect to the content providing server through the communication interface. The processor may be configured to execute the one or more instructions to display, on the display, a second user interface provided by the content providing server. The processor may be configured to execute the one or more instructions to generate a media player for playing media content received from the content providing server through the communication interface based on an input of requesting execution of the media content through the second user interface. The processor may be configured to execute the one or more instructions to obtain deep link information for accessing the media content being played back, while the media content is being played back by using the media player. The processor may be configured to execute the one or more instructions to provide a deep link item enabling direct access to the media content to the first user interface, based on the deep link information.

According to an aspect of the disclosure, a method of operating a display apparatus may include displaying, on a display of the display apparatus, a first user interface including an item enabling connection to a content providing server; based on an input for selecting the item, connecting to the content providing server. The method of operating the display apparatus may include displaying, on the display, a second user interface provided by the content providing server. The method of operating the display apparatus may include generating a media player for playing media content received from the content providing server based on an input of requesting execution of the media content through the second user interface. The method of operating the display apparatus may include obtaining deep link information for accessing the media content being played back, while the media content is being played back by using the media player. The method of operating the display apparatus may include providing a deep link item enabling direct access to the media content to the first user interface, based on the obtained deep link information.

According to an aspect of the disclosure, a non-transitory computer-readable medium storing one or more instructions which, when executed by a processor of a display apparatus, cause the display apparatus to: display a first user interface including an item enabling connection to a content providing server; based on an input for selecting the item, connect to the content providing server; display a second user interface provided by the content providing server; generate a media player for playing media content received from the content providing server based on an input of requesting execution of the media content through the second user interface; obtain deep link information for accessing the media content being played back, while the media content is being played back by using the media player; and provide a deep link item enabling direct access to the media content to the first user interface, based on the deep link information.

### DESCRIPTION OF DRAWINGS

The above and other aspects, features, and advantages of certain embodiments of the present disclosure are more apparent from the following description taken in conjunction with the accompanying drawings, in which:
FIG. 1 is a reference diagram for describing an operation of a content providing server and a display apparatus, according to an embodiment of the disclosure.
FIG. 2 illustrates an example of a system including a display apparatus, a controller, and a content providing server, according to an embodiment of the disclosure.
FIG. 3 is a block diagram of a display apparatus according to an embodiment of the disclosure.
FIG. 4 is a flowchart of a method of operating a display apparatus, according to an embodiment of the disclosure.
FIG. 5 illustrates an example of a media content home user interface (UI) according to an embodiment of the disclosure.
FIG. 6 illustrates an example of a server home UI according to an embodiment of the disclosure.
FIG. 7 illustrates an example of a deep link information database according to an embodiment of the disclosure.
FIG. 8 is a flowchart of a method of operating a display apparatus, according to an embodiment of the disclosure.
FIG. 9 illustrates an example of a home screen of a display apparatus according to an embodiment of the disclosure.
FIG. 10 shows an example of a gaming hub UI screen that may be displayed when a game home item is selected, according to an embodiment of the disclosure.
FIG. 11 illustrates an example of a media content stream according to an embodiment of the disclosure.
FIG. 12 illustrates an example of a media player pipeline according to an embodiment of the disclosure.
FIG. 13 is a flowchart of an example of a method, performed by a display apparatus, of obtaining deep link information, according to an embodiment of the disclosure.
FIG. 14 is a flowchart of an example of a method, performed by a display apparatus, of obtaining deep link information, according to an embodiment of the disclosure.
FIG. 15 is a flowchart of an example of a method, performed by a display apparatus, of obtaining deep link information, according to an embodiment of the disclosure.
FIG. 16 is a flowchart of an example of a method, performed by a display apparatus, of requesting and receiving deep link information, according to an embodiment of the disclosure.
FIG. 17 is a reference diagram for explaining a method of displaying a pre-determined number of deep link items, based on the order of items of recently played media content, according to an embodiment of the disclosure.
FIG. 18 is a reference diagram for explaining a method of displaying a pre-determined number of deep link items, based on the order of items of frequently played media content, according to an embodiment of the disclosure.
FIG. 19 is a reference diagram for explaining a method of displaying a deep link item, based on a user's designation, according to an embodiment of the disclosure.

### Mode for Invention

Terms used herein will be described briefly, and the disclosure will be described in detail.

Although general terms widely used at present were selected for describing the disclosure in consideration of the functions thereof, these general terms may vary according to intentions of one of ordinary skill in the art, case precedents, the advent of new technologies, or the like. Terms arbitrarily selected by the applicant of the disclosure may also be used in a specific case. In this case, their meanings need to be given in the detailed description of the disclosure. Hence, the terms must be defined based on their meanings and the contents of the entire specification, not by simply stating the terms.

The terms "comprises" and/or "comprising" or "includes" and/or "including" when used in this specification, specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The disclosure will now be described more fully with reference to the accompanying drawings, in which example embodiments of the disclosure are shown. The disclosure may, however, be embodied in many different forms and should not be construed as being limited to the embodiments set forth herein. In the drawings, parts irrelevant to the description are omitted for the simplicity of explanation, and like numbers refer to like elements throughout.

The term "user" used herein denotes a person who controls a function or operation of a computing device or an electronic device by using a control device. Examples of the user may include a viewer, a manager, or an installation engineer.

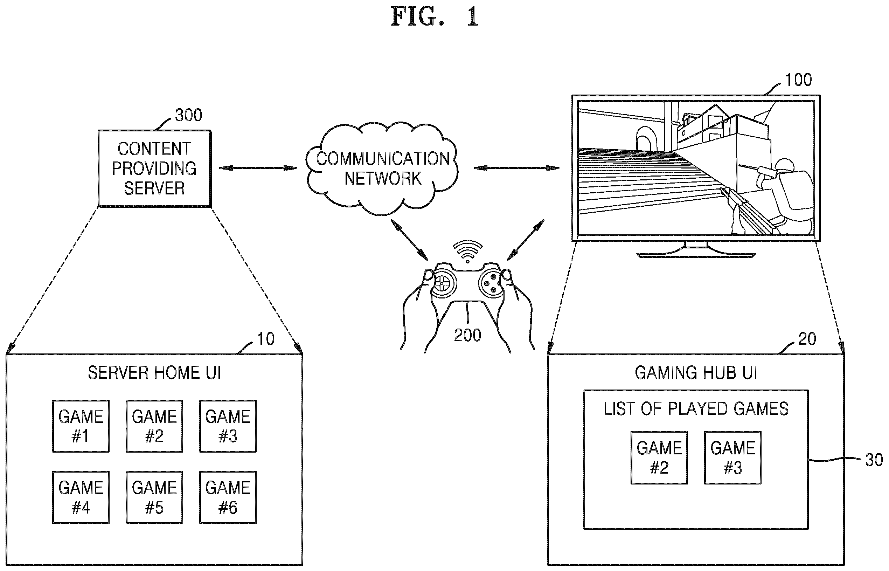

FIG. 1 is a reference diagram for describing an operation of a content providing server and a display apparatus according to one or more embodiments.

Referring to FIG. 1, a content providing server 300 may execute a content application in response to a request from a display apparatus 100, and may transmit a result screen according to execution of the content application to the display apparatus 100 via a communication network. For example, when the content providing server 300 receives an execution request for a game application from the display apparatus 100, the content providing server 300 may execute the game application and may transmit a result screen or result image rendered according to execution of the game application to the display apparatus 100 via a communication network.

The display apparatus 100 may transmit an execution request for a content application to the content providing server 300, may receive, from the content providing server 300, a result screen 30 according to execution of the content application in response to the execution request, and may display the received result screen 30 on a display thereof.

A controller 200 may transmit an operation command for controlling an application that is executed by the content providing server 300 and provides content corresponding to a result of the execution to the display apparatus 100, to the content providing server 300 via the communication network, or may transmit the operation command directly to the display apparatus 100.

The display apparatus 100 may provide a hub service for games, namely, a gaming hub service, that provides connection and control of cloud games, game consoles, etc., optimization settings of image quality or sound suitable for games, and a driving function of related applications. The display apparatus 100 may provide a gaming hub service by executing an application corresponding to the gaming hub service, search for and run games available on console game devices and cloud games, based on the gaming hub service, and execute all game-related settings, external apparatus control, etc. A cloud game refers to a game service in which a user terminal transmits a user's operation input to a cloud server, and the cloud server streams, to a display apparatus, such as a smart TV, a game screen rendered by a cloud game application that is controlled by performing major operations, such as graphics processing, according to the user's operation input.

The display apparatus 100 may also provide the user with a list of recently-played game content as a deep link, based on this gaming hub service. The deep link may be address information or a link capable of directly accessing a corresponding application or content without going through the homepage of the server that provides the application or content.

In order to play a cloud game, a user accesses a separate server home user interface (UI) running on a cloud server, then searches for the desired cloud game through the server home UI provided by the cloud server, and requests the cloud server to execute the desired cloud game, so, in a gaming Hub service, which is software provided by the display apparatus 100, it may be difficult to identify which game application has been executed within a server home after the server home UI proceeded. The server home UI may be referred to as a second UI. Referring to FIG. 1, the content providing server 300 may provide a server home UI 10 including items that enable execution of one or more game contents to start, to provide the one or more game contents to users. The display apparatus 100 may display the server home UI 10 provided by the content provision server 300, by connecting to a server computer through a web browser or executing an application corresponding to a content providing server installed on the display apparatus 100, and may transmit a user input of selecting one item from among the items to the content providing server 300 so that the content providing server may execute a game application corresponding to the item selected by the user. According to this procedure, the content providing server 300 may execute the selected game application and stream content corresponding to a result of the application execution to the display apparatus 100. Because the game application executed through the cloud server as described above is executed by the content providing server 300 and the display apparatus 100 receives content resulting from the execution of the game application in a streaming manner and displays the received content, it may be difficult for the display apparatus 100 to be actually executed and track the game application.

Therefore, because it is difficult for the display apparatus 100 to manage the history of a cloud game application executed through a UI provided by the cloud server, it may be difficult to provide a list of recently-played game content. Accordingly, the display apparatus 100 according to an embodiment of the disclosure tries to provide a method to provide a list of cloud game applications by managing the execution history of cloud game applications executed through a cloud server. For example, referring to FIG. 1, when the display apparatus 100 runs game #2 and game #3 through the server home UI 10, the display apparatus 100 may provide game #2 and game #3 as a list of played games to a gaming hub UI 20.

According to an embodiment of the disclosure, the display apparatus 100 may display a media content home UI including items that enable access to the content providing server. For example, the media content home UI may include a gaming hub UI 20. The media content home UI may be referred to as a first UI.

According to an embodiment of the disclosure, the display apparatus 100 may connect to the content providing server, for example, the content providing server 300, according to an input of selecting an item included in the media content home UI, and display the server home UI 10 provided by the content providing server. The server home UI 10 may include items for executing one or more media contents.

According to an embodiment of the disclosure, the display apparatus 100 may generate a media player for playing back the media content received from the content providing server in response to an input of requesting execution of media content through the server home UI 10.

According to an embodiment of the disclosure, the display apparatus 100 may obtain deep link information for accessing the media content being played back, while the media content received from the content providing server is being played using the generated media player.

According to an embodiment of the disclosure, the display apparatus 100 may provide a deep link item allowing direct access to the media content to the media content home UI, based on the obtained deep link information. According to an embodiment of the disclosure, the display apparatus 100 may request the content providing server 300 for deep link information for accessing the media content being played back, and may receive the deep link information from the content providing server 300 to thereby obtain the deep link information.

According to an embodiment of the disclosure, the display apparatus 100 may obtain media content identification information based on information corresponding to the media content being played, request deep link information for the media content identification information from the content providing server 300, and receive the deep link information from the content providing server 300, thereby obtaining the deep link information.

For example, the display apparatus 100 may receive metadata about the media content being played, and may obtain the media content identification information, such as a game title or game ID, from the metadata. Therefore, the display apparatus 100 may request the content providing server 300 for the deep link information corresponding to the game title or game ID and obtain the deep link information from the content providing server 300.

For example, the display apparatus 100 may obtain a fingerprint from content displayed on a display by using content fingerprinting (digital fingerprinting) as one of automatic content recognition, which is a technology capable of recognizing content that is displayed on the display. The display apparatus 100 may extract the fingerprint from the content displayed on the display, and send the extracted fingerprint to a fingerprint server that operates a fingerprint database. The fingerprint server may identify content displayed on the display apparatus 100, by matching the fingerprint received from the display apparatus 100 with a fingerprint stored in the fingerprint database. Then, the fingerprint server may provide the deep link information as information about the identified content to the display apparatus 100. According to an example, such a fingerprint server may be operated as a separate server that manages content information or may be included in the content providing server 300.

According to an embodiment of the disclosure, the display apparatus 100 may obtain information corresponding to the media content being played from stream metadata of the media content, or may obtain information corresponding to the media content being played by analyzing a content screen displayed on the display due to playback by a media player.

According to an embodiment of the disclosure, the display apparatus 100 may check whether a memory holds deep link information corresponding to the media content identification information, and obtain the deep link information from the memory.

According to an embodiment of the disclosure, the display apparatus 100 may identify whether playback by the media player starts, and, as it is identified that playback by the media player starts, may request the content providing server for deep link information for accessing the media content being played.

According to an embodiment of the disclosure, the display apparatus 100 may identify whether a content screen displayed on the display through playback by the media player includes pre-determined screen contents, and, when it is identified that the content screen includes the pre-determined screen contents, may request the content providing server for the deep link information for accessing the media content being played.

According to an embodiment of the disclosure, the display apparatus 100 may identify whether the type of media content is a pre-determined type, and, when the type of media content is identified as the pre-determined type, the display apparatus 100 may request the content provision server for the deep link information for accessing the media content being played. For example, the server home UI 10 may provide advertising content, a trailer of game content, or short video content in addition to game content. Even when a user selects one of a trailer of advertising content or game content, or simple and short video content provided by the server home UI 10, the display apparatus 100 may use the media player to reproduce the selected content. However, because there is little need to provide deep linking for types of content other than game content, the display apparatus 100 may not perform an operation for obtaining deep link information with respect to the types of content other than game content. To this end, the display apparatus 100 may identify whether the media content is of a pre-determined type, that is, content of a game category, based on information about the media content, and may perform an operation for obtaining deep link information, when the media content corresponds to a game category, and may not perform an operation for obtaining deep link information, when the media content does not correspond to a game category.

According to an embodiment of the disclosure, the deep link information may include a uniform resource locator (URL) for accessing media content and an identifier of the media content, and may include a thumbnail image of the media content or a link for the thumbnail image.

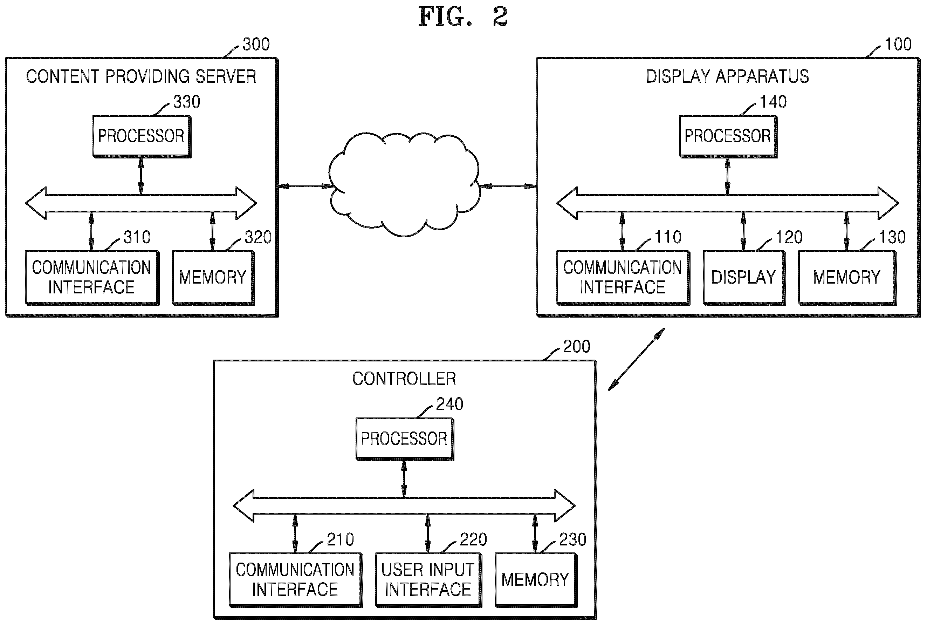

FIG. 2 illustrates an example of a system including a display apparatus, a controller, and a content providing server according to an embodiment of the disclosure.

Referring to FIG. 2, the system may include a display apparatus 100, a controller 200, and a content providing server 300 connected to one another via a communication network.

The display apparatus 100 is an apparatus capable of displaying an image or data according to a user's request, and may include a communication interface 110, a display 120, a memory 130, and a processor 140.

The communication interface 110 may include one or more modules that enable wireless communication between the display apparatus 100 and a wireless communication system or between the display apparatus 100 and a network in which another device is located. The communication interface 110 may include one or more communication circuits. According to an embodiment of the disclosure, the communication interface 110 may communicate with the controller 200 according to short-range communication technology. Examples of the short-range communication technology may include Bluetooth communication, Wi-Fi communication, infrared communication, for example. According to an embodiment of the disclosure, the communication interface 110 may communicate with the content providing server 300 according to an Internet protocol.

The display 120 may output an image or data processed by the display apparatus 100.

The memory 130 may store a program used by the processor 140 to perform processing and control, and may also store data that is input to or output from the display apparatus 100. The memory 130 may also store data necessary for an operation of the display apparatus 100.

The memory 130 may include at least one type of storage medium from among a flash memory type storage medium, a hard disk type storage medium, a multimedia card micro type storage medium, a card type memory (for example, SD or XD memory), a random access memory (RAM), a static RAM (SRAM), a read-only memory (ROM), an electrically erasable programmable ROM (EEPROM), a programmable ROM (PROM), a magnetic memory, a magnetic disk, and an optical disk.

The processor 140 may control the overall operation of the display apparatus 100. The processor 140 may include one or more processing circuits. For example, the processor 140 may perform a function of the display apparatus 100 by executing one or more instructions stored in the memory 130.

According to an embodiment of the disclosure, the processor 140 may store one or more instructions in an internal memory, and may control operations of the display apparatus to be performed, by executing the one or more instructions stored in the internal memory. In other words, the processor 140 may perform a specified operation by executing at least one instruction or program stored in the internal memory or the memory 130.

According to an embodiment of the disclosure, the processor 140 may perform an operation of the display apparatus 100 by executing the one or more instructions stored in the memory 130.

According to an embodiment of the disclosure, the processor 140 may execute the one or more instructions stored in the memory 130 to create a media player for playing the media content received from a server in response to a request to execute the media content.

According to an embodiment of the disclosure, the processor 140 may determine whether playback by the media player enters a pre-determined state, by executing the one or more instructions stored in the memory 130.

According to an embodiment of the disclosure, the processor 140 may execute the one or more instructions stored in the memory 130 to obtain deep link information for accessing the media content being played when it is determined that playback by the media player enters the pre-determined state.

According to an embodiment of the disclosure, the processor 140 may execute the one or more instructions stored in the memory 130 to provide a user interface allowing direct access to the media content based on the obtained deep link information.

According to an embodiment of the disclosure, the processor 140 may execute the one or more instructions stored in the memory 130 to request the server for deep link information for accessing the media content being played and receive the deep link information from the server to thereby obtain the deep link information.

According to an embodiment of the disclosure, the processor 140 may execute the one or more instructions stored in the memory 130 to obtain a media content identifier, based on information corresponding to the media content being played, request the server for deep link information for the media content identifier, and receive the deep link information from the server to thereby obtain the deep link information.

According to an embodiment of the disclosure, the processor 140 may execute the one or more instructions stored in the memory 130 to obtain the information corresponding to the media content being played from stream metadata of the media content or analyze a content screen displayed on the display due to playback by the media player to thereby obtain information corresponding to the media content.

According to an embodiment of the disclosure, the processor 140 may execute the one or more instructions stored in the memory 130 to check whether the memory holds the deep link information corresponding to the media content identifier and obtain the deep link information from the memory.

According to an embodiment of the disclosure, the processor 140 may determine whether playback by the media player enters a pre-determined state, based on the fact that playback by the media player starts, by executing the one or more instructions stored in the memory 130.

According to an embodiment of the disclosure, the processor 140 may determine whether playback of the media player enters a pre-determined state, when the content screen displayed on the display includes a pre-determined screen content due to playback by the media player, by executing the one or more instructions stored in the memory 130.

According to an embodiment of the disclosure, the processor 140 may determine whether playback by the media player enters a pre-determined state, when the media content corresponds to a pre-determined type based on the information about the media content, by executing the one or more instructions stored in the memory 130.

According to an embodiment of the disclosure, the deep link information may include a URL for accessing the media content and an identifier of the media content, and may include a thumbnail image of the media content or a link for the thumbnail image.

The display apparatus 100 may be any type of device that performs a function by including a processor and a memory. The display apparatus 100 may be a fixed or portable device. For example, the display apparatus 100 may represent a device capable of displaying image content, video content, game content, graphic content, and the like by including a display. The display apparatus 100 may output or display an image or content received from the content providing server 300. The display apparatus 100 may include various types of electronic devices capable of receiving and outputting content, such as televisions (TV) (such as, a network TV, a smart TV, an Internet TV, a web TV, and an IPTV), computers (such as, a desktop, a laptop, and a tablet), and various smart devices (such as, a smartphone, a cellular phone, a game player, a music player, a video player, medical equipment, and a home appliance). The display apparatus 100 may be referred to as a display apparatus in terms of receiving and displaying content, and may also be referred to as a content receiving device, a sink device, an electronic device, a computing device, or the like.

The block diagram of the display apparatus 100 illustrated in FIG. 2 is for an embodiment. Components illustrated in FIG. 2 may be combined or omitted according to the specifications of the display apparatus 100 when being actually implemented, or additional components may be included in the block diagram of FIG. 2. For example, according to need, two or more components are combined into a single component, or a single component may be divided into two or more components. A function performed in each block is merely an example to explain embodiments, and a detailed operation or device of each block does not limit the scope of the embodiments.

The controller 200 will now be described.

The controller 200 may include a communication interface 210, a user input interface 220, a memory 230, and a processor 240. However, the controller 200 may be implemented by more or less components than the components illustrated in FIG. 2. The controller 200 is a term that may be used in the sense that it plays a role in controlling the display apparatus 100, but embodiments of the disclosure are not limited thereto. The controller 200 may also be referred to as a control device, an electronic device, a remote control device, etc.

The communication interface 210 may include one or more modules that enable wireless communication between the controller 200 and a wireless communication system or between the controller 200 and a network in which another device is located. According to an embodiment of the disclosure, the communication interface 210 may communicate with the display apparatus 100 according to short-range communication technology. Examples of the short-range communication technology may include Bluetooth communication, Wi-Fi communication, infrared communication, etc. According to an embodiment of the disclosure, the communication interface 210 may communicate with the content providing server 300 according to an Internet protocol.

The user input interface 220 may be any type of interface capable of receiving a user input. For example, the user input interface 220 may be arranged in a portion of the controller 200 and may include an operation button capable of receiving a user input, a touch-sensitive display configured to detect a touch input, and a microphone capable of receiving a user's voice speech input.

The memory 230 may store a program used by the processor 240 to perform processing and control, and may also store data that is input to or output from the controller 200.

The memory 230 may include at least one type of storage medium from among a flash memory type storage medium, a hard disk type storage medium, a multimedia card micro type storage medium, a card type memory (for example, SD or XD memory), a random access memory (RAM), a static RAM (SRAM), a read-only memory (ROM), an electrically erasable programmable ROM (EEPROM), a programmable ROM (PROM), a magnetic memory, a magnetic disk, and an optical disk.

The processor 240 controls the overall operation of the controller 200. For example, the processor 240 may perform a function of the controller 200 according to an embodiment of the disclosure by executing one or more instructions stored in the memory 230.

According to an embodiment of the disclosure, the processor 240 may store one or more instructions in an internal memory, and may control the above-described operations to be performed, by executing the one or more instructions stored in the internal memory. In other words, the processor 240 may perform a specified operation by executing at least one instruction or program stored in an internal memory included in the processor 240 or in the memory 230.

According to an embodiment of the disclosure, the processor 240 may perform a communication connection with the display apparatus 100 by using short-range wireless communication technology, by executing the one or more instructions stored in the memory 230. Examples of the short-range wireless communication technology may include Bluetooth communication technology or Wi-Fi direct technology.

The controller 200 may be any type of device that performs a function by including a processor and a memory. The controller 200 may include various electronic devices such as a remote controller, a game controller, and a smartphone.

The block diagram of the controller 200 illustrated in FIG. 2 is for an embodiment. Components illustrated in FIG. 2 may be combined or omitted according to the specifications of devices when being actually implemented, or additional components may be included in the block diagrams of FIG. 2. For example, according to need, two or more components are combined into a single component, or a single component may be divided into two or more components. A function performed in each block is merely an example to explain embodiments, and a detailed operation or device of each block does not limit the scope of the embodiments.

The content providing server 300 will now be described.

The content providing server 300 may include a communication interface 310, a memory 320, and a processor 330. However, the content providing server 300 may be implemented by more or less components than the components illustrated in FIG. 2. For example, the content providing server 300 may include a separate image processor for image processing of an application image executed by the content providing server 300.

The communication interface 310 may include one or more modules that enable wireless communication between the content providing server 300 and a wireless communication system or between the content providing server 300 and a network in which another device is located. According to an embodiment of the disclosure, the communication interface 310 may communicate with the display apparatus 100 according to an Internet protocol. According to an embodiment of the disclosure, the communication interface 310 may communicate with the controller 200 according to an Internet protocol.

The memory 320 may store a program used by the processor 330 to perform processing and control, and may also store data that is input to or output from the content providing server 300.

The memory 320 may include at least one type of storage medium from among a flash memory type storage medium, a hard disk type storage medium, a multimedia card micro type storage medium, a card type memory (for example, SD or XD memory), a random access memory (RAM), a static RAM (SRAM), a read-only memory (ROM), an electrically erasable programmable ROM (EEPROM), a programmable ROM (PROM), a magnetic memory, a magnetic disk, and an optical disk.

The processor 330 controls the overall operation of the content providing server 300. For example, the processor 330 may perform a function of the content providing server 300 by executing the one or more instructions stored in the memory 320.

According to an embodiment of the disclosure, the processor 330 may store one or more instructions in an internal memory, and may control operations of the display apparatus to be performed, by executing the one or more instructions stored in the internal memory. In other words, the processor 330 may perform a specified operation by executing at least one instruction or program stored in the internal memory or the memory 320.

According to an embodiment of the disclosure, the processor 330 may receive a request to execute a content application from the display apparatus 100, and transmit content as a result of executing the requested content application to the display apparatus 100, by executing one or more instructions stored in the memory 320.

According to an embodiment of the disclosure, the processor 330 may load and execute the requested game content in response to a game content start request from the display apparatus 100 and perform game content streaming, by executing the one or more instructions stored in the memory 320.

According to an embodiment of the disclosure, the processor 330 may receive a deep link request of currently-being-executed game content from the display apparatus 100 and transmit requested deep link information to the display apparatus 100, by executing the one or more instructions stored in the memory 320.

According to an embodiment of the disclosure, the processor 330 may receive a deep link request together with identification information of game content from the display apparatus 100 and transmit requested deep link information to the display apparatus 100, by executing the one or more instructions stored in the memory 320.

The block diagram of the content providing server 300 illustrated in FIG. 2 is for an embodiment. Components illustrated in FIG. 2 may be combined or omitted according to the specifications of the content providing server 300 when being actually implemented, or additional components may be included in the block diagram of FIG. 2. For example, according to need, two or more components are combined into a single component, or a single component may be divided into two or more components. A function performed in each block is merely an example to explain embodiments, and a detailed operation or device of each block does not limit the scope of the embodiments.

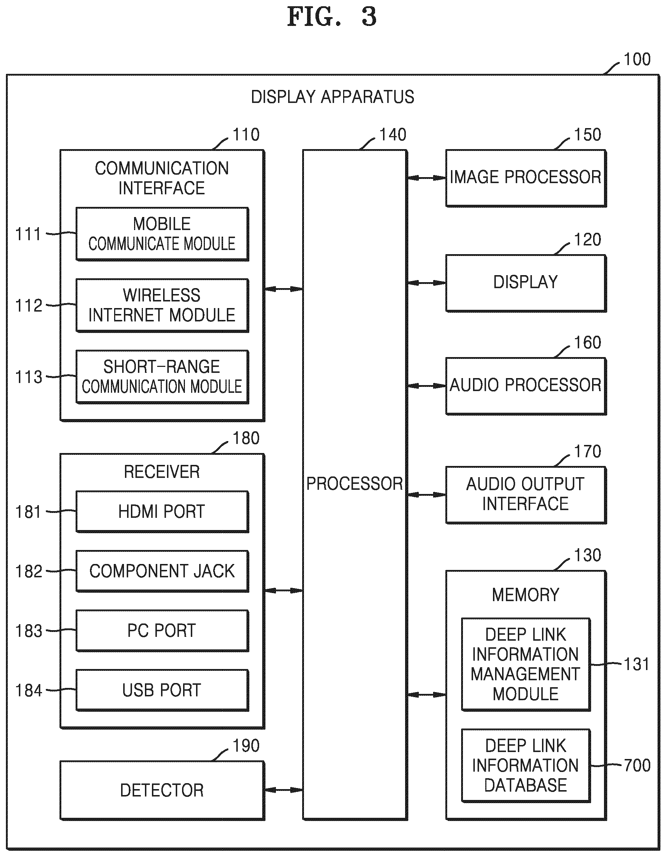

FIG. 3 is a block diagram of the display apparatus 100 according to an embodiment of the disclosure.

Referring to FIG. 3, the display apparatus 100 may include an image processor 150, an audio processor 160, an audio output interface 170, a receiver 180, and a detector 190, in addition to the communication interface 110, the display 120, the memory 130, and the processor 140.

The communication interface 110 may include one or more modules that enable wireless communication between the display apparatus 100 and a wireless communication system or between the display apparatus 100 and a network in which another electronic device is located. For example, the communication interface 110 may include a mobile communication module 111, a wireless Internet module 112, and a short-range communication module 113.

The mobile communication module 111 transmits or receives a wireless signal to or from at least one of a base station, an external terminal, or a server on a mobile communication network. Examples of the wireless signal may include a voice call signal, a video call signal, or various types of data according to text/multimedia message exchange.

The wireless Internet module 112 is referred to as a module for wireless Internet access, and may be embedded in or provided outside the display apparatus 100. Wireless LAN (WLAN) (WiFi), wireless broadband (Wibro), World Interoperability for Microwave Access (Wimax), High Speed Downlink Packet Access (HSDPA), for example. may be used a wireless Internet technology. Through the wireless Internet module 122, the display apparatus 100 may perform a Wi-Fi Peer to Peer (P2P) connection with another device.

The short-distance communication module 113 denotes a module for short-distance communication. Bluetooth, Bluetooth Low Energy (BLE), Radio Frequency Identification (RFID), Infrared Data Association (IrDA), Ultra Wideband (UWB), ZigBee, for example. may be used as short-distance communication.

The display 120 may display, on a screen, an image signal received from the content providing server 300.

The memory 130 may store a program related to an operation of the display apparatus 100 and various pieces of data generated during an operation of the display apparatus 100.

The memory 130 may store at least one instruction. The memory 130 may store at least one instruction that the processor 140 executes. The memory 130 may store at least one program that the processor 140 executes. The memory 130 may store an application for providing a specified service.

In detail, the memory 130 may include at least one type of storage medium from among a flash memory type storage medium, a hard disk type storage medium, a multimedia card micro type storage medium, a card type memory (for example, SD or XD memory), a random access memory (RAM), a static RAM (SRAM), a read-only memory (ROM), an electrically erasable programmable ROM (EEPROM), a programmable ROM (PROM), a magnetic memory, a magnetic disk, and an optical disk.

According to an embodiment of the disclosure, the memory 130 may include a deep link information management module 131 including one or more instructions for requesting and managing deep link information according to one or more embodiments, and a deep link information database 700 storing the obtained deep link information.

The processor 140 controls the overall operation of the display apparatus 100. For example, the processor 140 may perform a function of the display apparatus 100 by executing the one or more instructions stored in the memory 130.

According to an embodiment of the disclosure, the processor 140 may store one or more instructions in an internal memory, and may control operations of the display apparatus to be performed, by executing the one or more instructions stored in the internal memory. In other words, the processor 140 may perform a specified operation by executing at least one instruction or program stored in the internal memory or the memory 130.

According to an embodiment of the disclosure, the processor 140 may obtain and manage deep link information according to an embodiment of the disclosure by executing one or more instructions included in the deep link information management module 131 stored in the memory 130.

The image processor 150 may process an image signal received from the receiver 180 or the communication interface 110 and output a processed image signal to the display 120, under a control by the processor 140.

The audio processor 160 may convert an audio signal received from the receiver 180 or the communication interface 110 into an analog audio signal and output the analog audio signal to the audio output interface 170, under the control by the processor 140.

The audio output interface 170 may output audio (for example, a voice or a sound) that is input via the communication interface 110 or the receiver 180. The audio output interface 170 may also output audio stored in the memory 130 under a control by the processor 140. The audio output interface 170 may include at least one of a speaker, a headphone output port, or a Sony/Philips Digital Interface (S/PDIF) output port, or a combination thereof.

The receiver 180 may receive video (for example, a moving picture), audio (for example, a voice or music), and additional information (for example, an EPG) from outside the display apparatus 100 under the control by the processor 140. The receiver 180 may include a High-Definition Multimedia Interface (HDMI) port 181, a component jack 182, a personal computer (PC) port 183, or a universal serial bus (USB) port 184, or may include a combination of one or more of the aforementioned ports. The receiver 180 may further include a DisplayPort (DP), a Thunderbolt, and a Mobile High-Definition Link (MHL) in addition to the HDMI port.

The detector 190 may detect a voice of a user, an image of the user, or an interaction of the user, and may include a microphone, a camera, and a light receiver. The microphone receives an uttered voice of the user. The microphone may transform the received voice into an electrical signal and output the electrical signal to the processor 140. The user's voice may include, for example, a voice corresponding to a menu or function of the display apparatus 100. The camera may receive an image (for example, consecutive frames) corresponding to a motion of the user including a gesture within a recognition range of the camera. The processor 140 may select a menu that is displayed on the display apparatus 100 by using a result of the recognition of the received motion, or perform control corresponding to the result of the recognition of the received motion. The light receiver receives an optical signal (including a control signal) from an external control device. The light receiver may receive an optical signal corresponding to a user input (for example, touch, pressing, a touch gesture, a voice, or a motion) from the external control device. A control signal may be extracted from the received optical signal under the control by the processor 140.

The processor 140 controls an overall operation of the display apparatus 100 and signal flow between internal components of the display apparatus 100, and processes data. When there is an input of the user or stored preset conditions are satisfied, the processor 140 may execute an operating system (OS) and various applications that are stored in the memory 130.

The processor 140 may include a graphics processing unit (GPU) for performing graphics processing corresponding to a video. The GPU generates a screen image including various objects, such as an icon, an image, and a text, by using an arithmetic unit and a rendering unit. The arithmetic unit calculates attribute values, such as a coordinate value, a shape, a size, a color, and the like, with which each object is to be displayed according to a layout of the screen image, by using the user's interaction detected by the detector 190. The rendering unit generates screen images of various layouts including objects, based on the attribute values calculated by the arithmetic unit.

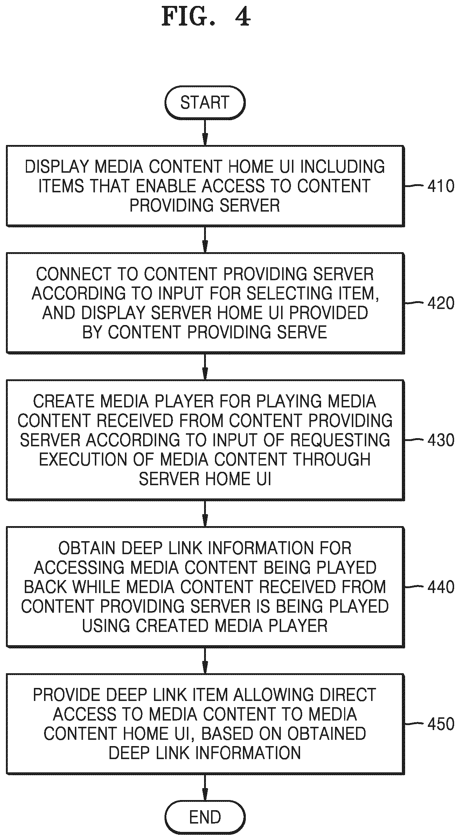

FIG. 4 is a flowchart of a method of operating a display apparatus, according to an embodiment of the disclosure.

Referring to FIG. 4, in operation 410, the display apparatus 100 may display a media content home UI including items that enable access to a content providing server.

According to an embodiment of the disclosure, the display apparatus 100 may display the media content home UI according to a user's request. The media content home UI may represent a UI for providing items that enable access to one or more content providing servers to facilitate access of the user of the display apparatus 100 to the content provision server.

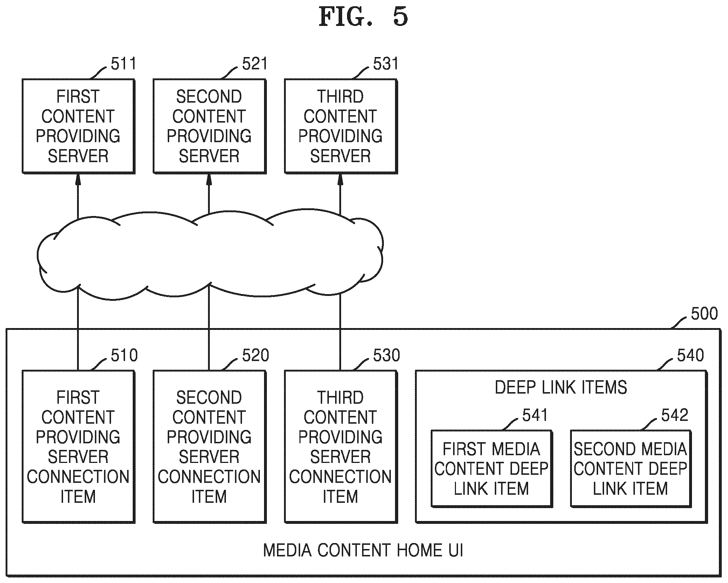

FIG. 5 illustrates an example of a media content home UI according to an embodiment of the disclosure.

Referring to FIG. 5, according to an embodiment of the disclosure, a media content home UI 500 may include items that enable access to one or more content providing servers. An item that enables access to a content providing server may include a thumbnail image representing the content providing server, and, when a URL for accessing the content providing server is connected to the item and receives a selection input from the user, the display apparatus 100 may access the content providing server by using the connected URL.

Referring to FIG. 5, the media content home UI 500 may include a first content providing server connection item 510, a second content providing server connection item 520, and a third content providing server connection item 530. In response to a user input for selecting the first content providing server connection item 510, the display apparatus 100 may connect to a first content providing server 511 to display a server home UI provided by the first content providing server 511. In response to a user input for selecting the second content providing server connection item 520, the display apparatus 100 may connect to a second content providing server 521 to display a server home UI provided by the second content providing server 521. In response to a user input for selecting the third content providing server connection item 530, the display apparatus 100 may connect to a third content providing server 531 to display a server home UI provided by the third content providing server 531.

In operation 420, the display apparatus 100 may connect to a content providing server according to an input for selecting a content providing server connection item, and may display a server home UI provided by the content providing server.

For example, in response to an input for selecting the first content providing server connection item 510 displayed on the media content home UI 500 as shown in FIG. 5, the display apparatus 100 may access the first content providing server 511 by using uses a URL of the first content providing server 511, and may display a server home UI provided by the first content providing server 511.

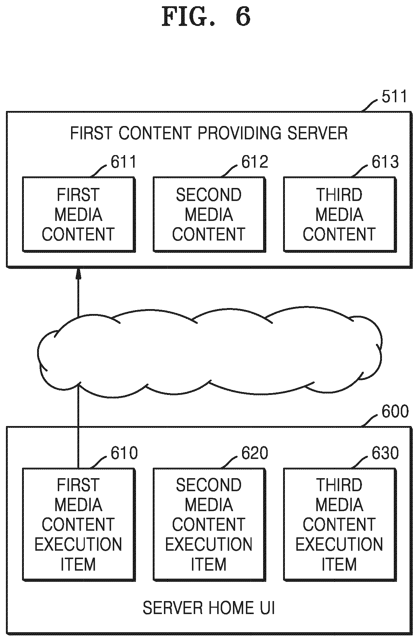

FIG. 6 illustrates an example of a server home UI according to an embodiment of the disclosure.

Referring to FIG. 6, a server home UI 600 may include one or more media content execution items, a media content execution item may include a thumbnail image representing corresponding media content, and, when receiving an input for selecting such an execution item from a user, the display apparatus 100 may transmit a media content execution request corresponding to the selected item to a content providing server.

Referring to FIG. 6, the server home UI 600 may include a first media content execution item 610, a second media content execution item 620, and a third media content execution item 630.

In response to an input for selecting the first media content execution item 610, the display apparatus 100 may transmit a request to execute first media content 611 to the first content providing server 511, and then, the first content providing server 511 may execute the first media content 611 and transmit a screen image indicating a result of the execution to the display apparatus 100. In response to an input for selecting the second media content execution item 620, the display apparatus 100 may transmit a request to execute second media content 612 to the first content providing server 511, and then, the first content providing server 511 may execute the second media content 612 and transmit a screen image indicating a result of the execution to the display apparatus 100. In response to an input for selecting the third media content execution item 630, the display apparatus 100 may transmit a request to execute third media content 613 to the first content providing server 511, and then, the first content providing server 511 may execute the third media content 613 and transmit a screen image indicating a result of the execution to the display apparatus 100.

Referring back to FIG. 4, in operation 430, the display apparatus 100 may create a media player for playing media content received from the content providing server according to an input of requesting execution of media content through the server home UI.

According to an embodiment of the disclosure, to create a media player for playing a media content stream executed and transmitted by the content providing server, the display apparatus 100 may receive information for creating the media player through communication with the content providing server. The information for creating the media player may be obtained through metadata or information included in a video stream, and may include information such as the compression format of a video stream and a video codec.

The media player may represent a multimedia playback pipeline consisting of a series of stages that process, decode, and render audio video content streamed by a server. The display apparatus 100 may configure a multimedia playback pipeline by setting a decoder, configuring a video output parameter such as a resolution or refresh rate, and connecting pipeline components, based on the information for creating the media player.

In operation 440, the display apparatus 100 may obtain deep link information for accessing media content being played back while the media content received from the content providing server is being played using the created media player.

Deep link information corresponding to media content is information that enables direct access to the media content, and may include a URL of the media content. The deep link information may further include media content identification information, the title name of the media content, a thumbnail image of the media content, or a link to access the thumbnail image, in addition to the URL of the media content.

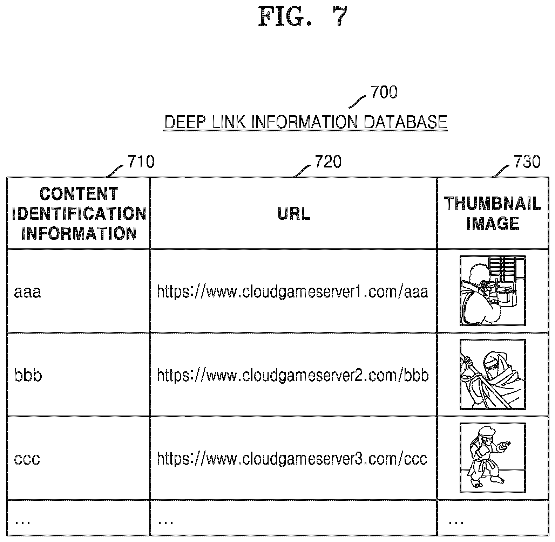

FIG. 7 illustrates an example of a deep link information database according to an embodiment of the disclosure.

Referring to FIG. 7, the display apparatus 100 may store the obtained deep link information in a deep link information database 700. Deep link information stored in response to each media content may include content identification information 710, a URL 720, and a thumbnail image 730. Of course, a thumbnail image for representing media content may be used as an image to be used to display a deep link item. However, embodiments of the disclosure are not limited thereto, and a thumbnail image does not necessarily have to be used to display a deep link item, but text or a video thumbnail may also be used. In FIG. 7, deep link information corresponding to media content aaa, bbb, and ccc is stored.

According to an embodiment of the disclosure, the display apparatus 100 may request a content providing server for deep link information for accessing currently-being-executed media content, and may obtain the deep link information from the content providing server in response to the request. When a promise has been made in advance between the display apparatus 100 and the content providing server through an application programming interface (API) or the like, the display apparatus 100 may request deep link information through the API promised between the display apparatus 100 and the content providing server without any additional information. Then, the content providing server may transmit the deep link information of the currently-being-executed media content to the display apparatus 100.

According to an embodiment of the disclosure, the display apparatus 100 may obtain identification information for the currently-being-executed media content, and may request the content providing server for link information corresponding to the media content identification information. Then, the content providing server may transmit the deep link information corresponding to the media content identification information to the display apparatus 100. When an API for requesting deep link information and responding to the request is not determined in advance between the display apparatus 100 and the content providing server, the display apparatus 100 may obtain identification information about the currently-being-executed media content and transmit a request for the media content identification information and deep link information for the media content to the content providing server, thereby obtaining the deep link information corresponding to the media content.

According to an embodiment of the disclosure, the display apparatus 100 may check whether a memory holds the deep link information for the currently-being-executed media content, and may obtain the deep link information for the currently-being-executed media content from the memory.

According to an embodiment of the disclosure, the display apparatus 100 may determine whether playback by the media player enters a pre-determined state, that is, the media player starts playback, by monitoring the status of the media player, and, when it is determined that playback begins, may perform a deep link information request operation.

The state of the media player may further include a state in which the media player has only been generated, a state in which playback of a media content stream has begun, or other states.

According to an embodiment of the disclosure, the display apparatus 100 may monitor the status of the media player to determine whether playback by the media player enters a pre-determined state. For example, the display apparatus 100 may determine whether playback by the media player has started. Accordingly, even when the display apparatus 100 has received a media content stream according to a user's media content execution request, the display apparatus 100 creates only a media player, and, when playback by the media content stream is stopped according to a user input of ending content playback, it may be difficult to consider that such media content has been actually executed. Accordingly, the display apparatus 100 may determine that a state in which playback by the media player is the pre-determined state, and may determine whether the media player enters this state.

According to an embodiment of the disclosure, the display apparatus 100 may analyze whether a screen displayed on the display of the display apparatus 100 includes pre-determined screen contents even when execution of the media player starts, and may perform a deep link information request operation, based on this analysis. For example, even when playback by the media player starts on the display apparatus 100 and thus a content screen image is displayed on the display, if a user ends content reproduction after watching a logo screen image of corresponding content or the screen contents of a front portion of the content, it may be difficult to consider from this situation that the user has consumed this content properly. Even in this case, a need to provide a deep link of this content to a media content home UI will decrease, so a deep link request operation may not be performed with respect to content that has finished playing, before the actual content screen image is displayed as described above.

According to an embodiment of the disclosure, the display apparatus 100 may perform a deep link request operation when the type of media content corresponds to a pre-determined type, based on information about the media content. When the media content home UI is a UI provided to access content of a game category, and content received from the content providing server and played back is not game category content, but is simply advertising content, a trailer of video content, or simple video content, there will be no need to provide a deep link for non-game content to the media content home UI. Therefore, the display apparatus 100 may identify the type of content played back on the display apparatus 100 before requesting deep link information, and may perform a deep link information request operation when the type of content played back is identified as a pre-determined type, for example, a type corresponding to a game category.

In operation 450, the display apparatus 100 may provide a deep link item allowing direct access to the media content to the media content home UI, based on the obtained deep link information. Due to this provision of the deep link item allowing direct access to the media content to the media content home UI by the display apparatus 100, based on the obtained deep link information, users are able to make direction selection for execution of server-provided content from the media content home UI provided by the display apparatus 100, without needing to connecting to the content providing server again for the server-provided content that they once accessed and request execution of media content through the server home UI provided by the content providing server.

According to an embodiment of the disclosure, the display apparatus 100 may provide one or more deep link items to the media content home UI.

According to an embodiment of the disclosure, the display apparatus 100 may provide a pre-determined number of deep link items to the media content home UI according to the order of most-recently played media content among the deep link information.

According to an embodiment of the disclosure, the display apparatus 100 may provide a pre-determined number of deep link items to the media content home UI according to the order of frequently played media content among the deep link information.

According to an embodiment of the disclosure, the display apparatus 100 may provide a user interface allowing reception of a user input designated as a deep link item, and provide a deep link item for media content corresponding to the user input received through this user interface to the media content home UI.

As described above, the display apparatus 100 may provide a first media content deep link item 541 and a second media content deep link item 542 as one or more deep link items 540 to the media content home UI 500 shown in FIG. 5. By providing an item allowing direct access to media content provided by the server to the media content home UI 500 provided by the display apparatus 100 as described above, when receiving an input for selecting this item from the user, the display apparatus 100 may directly request the content providing server 300 to start the media content by using a URL linked to this item. When such a deep link item is not provided, a user needs to first select the first content providing server connection item 510 from the media content home UI 500 and display the server home UI 600 of FIG. 6, and select the first media content execution item 610 from the displayed server home UI 600, to reproduce the first media content provided by the first content providing server 511. However, according to an embodiment of the disclosure, a media content deep link item may be provided to the server home UI 600, and thus a user may immediately and directly access the first media content by selecting the deep link item 540 displayed on the server home UI 600.

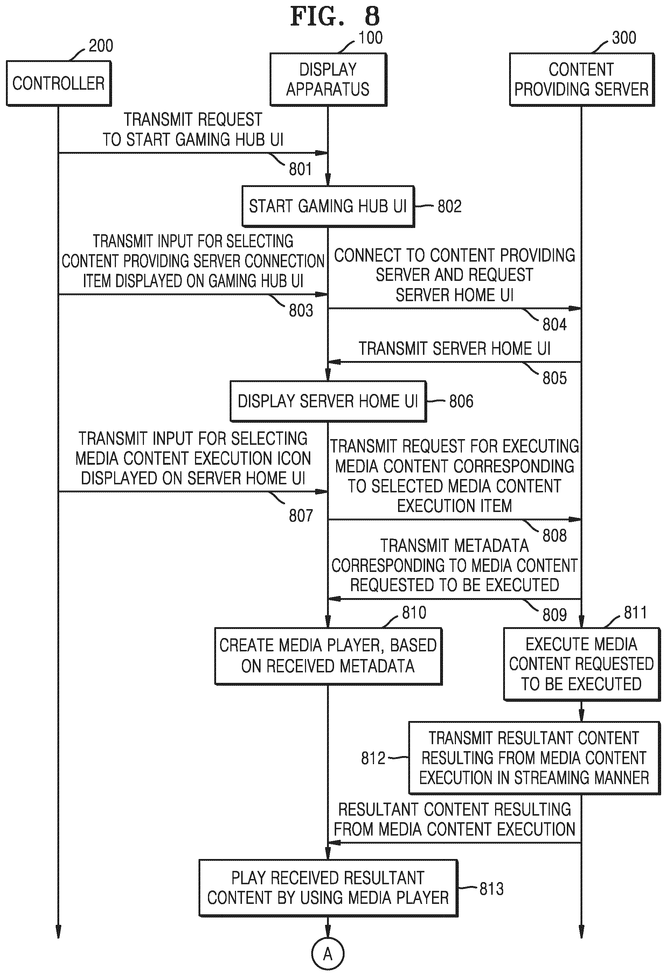

FIG. 8 is a flowchart of a method of operating a display apparatus, according to an embodiment of the disclosure.

Referring to FIG. 8, in operation 801, the controller 200 may transmit a request to start a gaming hub UI. A gaming hub is a service provided by the display apparatus 100 to provide game content to users more conveniently and simply, and the gaming hub UI represents a user interface for providing the gaming hub service. The gaming hub UI may be an example of the media content home UI described above with reference to FIG. 4.

The controller 200 is communicatively connected to the display apparatus 100 and turned on. A user may transmit, to the display apparatus 100, a request to start the gaming hub UI displayed on the display apparatus 100, by pressing a button provided on the controller 200. The user may transmit this request by pressing a button provided on the controller 200 or by selecting an item that starts the gaming hub UI provided on a home screen provided by the display apparatus 100.

In operation 802, the display apparatus 100 may start the gaming hub UI according to the gaming hub UI start request received from the controller 200. The gaming hub UI may include various menus and items for executing game content. For example, the gaming hub UI may include items that enable connection to one or more content providing servers.

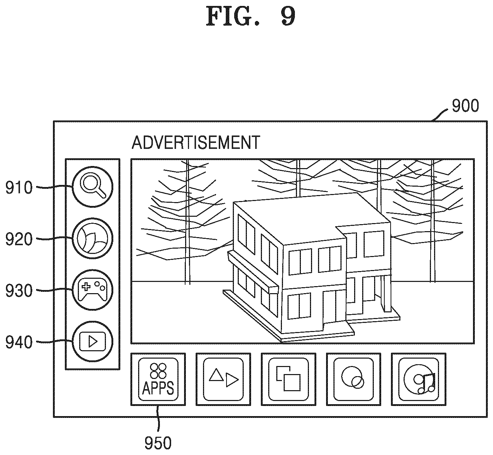

FIG. 9 illustrates an example of a home screen of a display apparatus according to an embodiment of the disclosure.

Referring to FIG. 9, a display apparatus home screen 900 according to an embodiment of the disclosure may include a search item 910, a magic screen item 920, a game home item 930, a media panel item 940, and an apps item 950. The display apparatus home screen 900 shown in FIG. 9 may be displayed by the display apparatus 100 when a home button of a controller is received.

The search item 910 may represent an interface that allows searching for the title of a channel, program, or movie, or an app provided by a server.

The magic screen item 920 may represent an interface that allows display of content harmonized with a surrounding environment or living information, such as weather and time, on a screen, when video content is not viewed through a display apparatus.

The game home item 930 is a game streaming platform provided by the display apparatus 100, and may represent an interface that allows users to select and play games. The game streaming platform may support a user to connect to a cloud, a game console, etc. to immediately play latest/popular games in one gaming hub.

The media home item 940 may represent an interface that allows a user to watch various TV programs and install various apps such as videos, music, sports, and games provided from the server and use them on the display apparatus 100.

The apps item 950 may represent an interface that allows installation of various apps such as videos, music, sports, and games provided by the server.

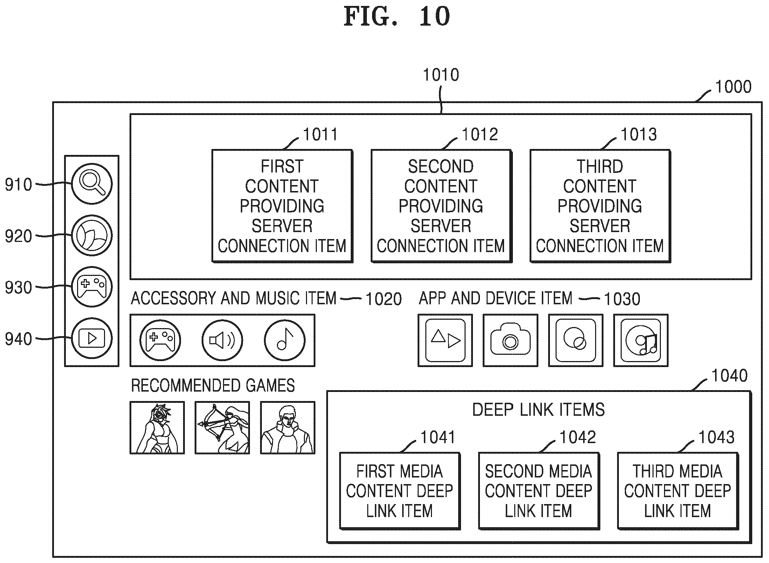

FIG. 10 shows an example of a gaming hub UI screen that may be displayed when a game home item is selected, according to an embodiment of the disclosure.

Referring to FIG. 10, a gaming hub UI screen 1000 may provide an interface that makes it more convenient for users to play console games or cloud games and increases game immersion.

The gaming hub UI screen 1000 may include an item 1010 that enables connection to one or more content providing servers. For example, the item 1010 that enables connection to one or more content providing servers may include a first content providing server connection item 1011, a second content providing server connection item 1012, and a third content providing server connection item 1030.

The gaming hub UI screen 1000 may include an accessory and music item 1020. The accessory and music item 1020 may represent an interface that allows selection of a controller to be connected to the display apparatus 100, selection of an audio device to be connected to the display apparatus 100, or provision of a music service capable of managing music reproduced while playing a game.

The gaming hub UI screen 1000 may include an app and device item 1030. The app and device item 1030 may represent an interface that allows management of applications and devices for playing games on the display apparatus 100.

Deep link items 1040 represent items that provide deep links for items of media content so that items of media content provided by a content providing server may be directly accessed without going through a home UI provided by the content providing server. By obtaining deep link information according to an embodiment of the disclosure, the display apparatus 100 may provide the deep link items 1040 to at least a portion of the gaming hub UI screen 1000. The deep link items 1040 may include, for example, a first media content deep link item 1041 enabling direct access to first media content, a second media content deep link item 1042 enabling direct access to second media content, and a third media content deep link item 1043 enabling direct access to third media content.

In operation 803, the controller 200 may transmit, to the display apparatus 100, an input for selecting a content providing server connection item displayed on a gaming hub UI screen displayed on the display apparatus 100.

For example, the user may make an input of selecting the first content providing server connection item 1011 from the gaming hub UI screen 1000 of FIG. 10 by using the controller 200, and the controller 200 may transmit an input signal for selecting the first content providing server connection item 1011 to the display apparatus 100.

In operation 804, according to the input for selecting a content providing server connection item, which is received from the controller 200, the display apparatus 100 may connect to the content providing server 300 by using a URL related to the content providing server connection item and may request the content providing server 300 for a server home UI screen. For example, when receiving an input for selecting the first content providing server connection item 1011 from the controller 200, the display apparatus 100 may connect to the first content providing server by using the URL related to the first content providing server connection item 1011 and request the first content providing server for a server home UI screen.

In operation 805, the content providing server 300 may transmit the server home UI to the display apparatus 100 according to the request from the display apparatus 100.

In operation 806, the display apparatus 100 may display the server home UI received from the content providing server 300. The server home UI may include items capable of selecting one or more items of media content. For example, the server home UI may be an example as shown in FIG. 6.

In operation 807, the controller 200 may transmit, to the display apparatus 100, an input for selecting a media content execution icon displayed on the server home UI screen. For example, the server home UI screen may include items for executing one or more items of media content, and the user may select one desired item for media content execution from among one or more displayed items for media content execution, by using the controller 200.

In operation 808, the display apparatus 100 may receive an input for selecting a media content execution item from the controller 200, and may transmit, to the content providing server 300, a request for executing media content corresponding to the media content execution item selected according to the input.

In operation 809, the content providing server 300 may transmit, to the display apparatus 100, metadata corresponding to the media content requested to be executed according to the media content execution request received from the display apparatus 100. The metadata is transmit to the display apparatus 100 so that the display apparatus 100 may prepare in advance to create a media player for playing media content. The metadata corresponding to the media content transmitted to the display apparatus 100 may include information such as resolution information, frame rate information, and a codec type.

In operation 810, the display apparatus 100 may receive the metadata corresponding to the media content from the content providing server 300 and create a media player by using the information included in the received metadata.

In operation 811, the content providing server 300 may execute the media content requested to be executed by the display apparatus 100. In operation 812, the content providing server 300 may transmit resultant content resulting from the media content execution to the display apparatus 100 in a streaming manner.

In operation 813, the display apparatus 100 may receive the resultant content from the content providing server 300 and play the received resultant content by using the media player.

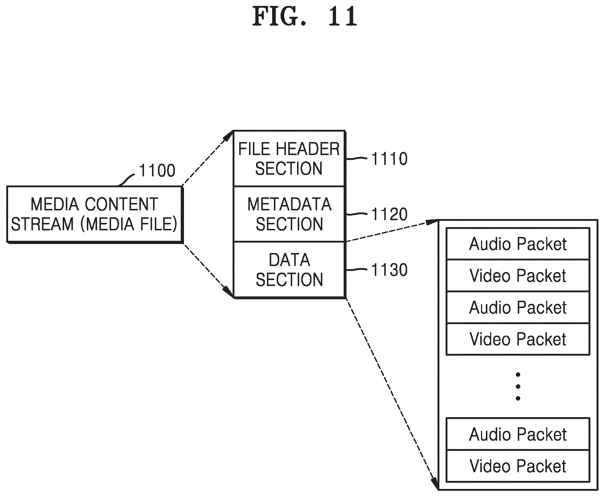

FIG. 11 illustrates an example of a media content stream according to an embodiment of the disclosure.

Referring to FIG. 11, the content providing server 300 may generate a media content stream according to a format and transmit the media content stream to the display apparatus 100, and this format may be referred to as a media file or media container.

According to an embodiment of the disclosure, a media file 1100 including a media content stream may include a file header section 1110 describing the number of streams and the format of each stream, a metadata section 1120 describing content, and a data section 1130 in which audio packets and video packets are interleaved.

The metadata section 1120 may include media-type attributes specifying encoding parameters (such as, an encoding algorithm, a video frame size, a video frame rate, an audio bit rate, and an audio sample rate), description information of media content (such as, a title, an artist, a genre, and encoding parameters), and DRM characteristic information (such as, usage restrictions).

The media container refers to a package that includes a stream, a header, an index, metadata, etc., and examples of the media container may include an AVI file format, MP4, and ASF.

In the data section 1130, audio packets and video packets are interleaved. Packetizing an audio stream and a video stream and interleaving them in a container is called multiplexing, and reassembling the audio and video streams from data resulting from the packetizing is called demultiplexing.

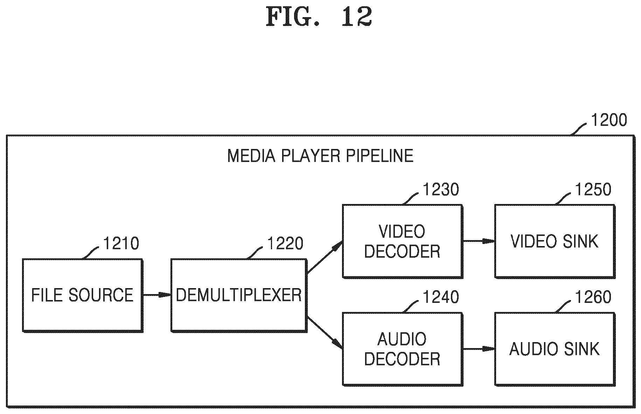

According to an embodiment of the disclosure, the display apparatus 100 may create a media player pipeline including objects that generate or process media data, based on a game content stream. An example of a media player pipeline according to an embodiment of the disclosure will be described with reference to FIG. 12.

FIG. 12 illustrates an example of a media player pipeline according to an embodiment of the disclosure.

Referring to FIG. 12, a media player pipeline 1200 according to an embodiment of the disclosure may include a file source 1210, a demultiplexer 1220, a video decoder 1230, an audio decoder 1240, a video sink 1250, and an audio sink 1260.

The file source 1210 brings data into the media player pipeline 1200. The file source 1210 may retrieve data from a video file of a network stream.

The demultiplexer 1220 demultiplexes audio packets and video packets interleaved in a media content stream.

The video decoder 1230 processes video packet data from the network stream.

The audio decoder 1240 processes audio packet data from the network stream.

The video sink 1250 shows video to a display based on decoded video data.

The audio sink 1260 plays audio, based on decoded audio data.

An application controls the flow of data through a media player pipeline, controls the media player pipeline through a media session that handles tasks such as quality control, audio/video synchronization, and responding to format changes, and receives an event from the media player pipeline.

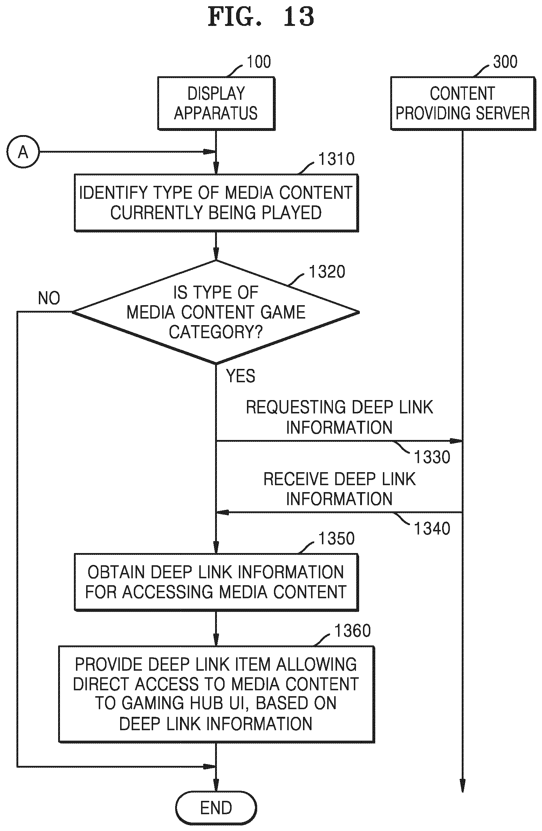

Referring back to FIG. 8, when the display apparatus 100 receives the resultant content resulting from the media content execution from the content providing server 300 and plays or prepares to play the resultant content by using the media player in operation 813, the method may proceed to A so that the display apparatus 100 may perform an operation of obtaining deep link information for the content being played back. Various embodiments of obtainment of deep link information will now be described with reference to FIGS. 13 through 19.

FIG. 13 is a flowchart of an example of a method, performed by the display apparatus 100, of obtaining deep link information, according to an embodiment of the disclosure.

Referring to FIG. 13, in operation 1310, the display apparatus 100 may identify the type of media content currently being played in a media player.

According to an embodiment of the disclosure, the display apparatus 100 may obtain information about the type of media content by parsing metadata of media content received from the content providing server 300. For example, the display apparatus 100 may obtain information about the type of media content by using at least one of type information, category information, a content identifier, or a title name of the media content included in the metadata.

In operation 1320, the display apparatus 100 may determine whether the type of media content is a game category. The display apparatus 100 may provide a deep link for media content of a specific category among items of media content played by the media player of the display apparatus 100. For example, the display apparatus 100 may determine whether the category of media content targeted by a deep link information request operation is a game category to provide a deep link for game content to a gaming hub UI screen. This is because, when the content executed at a user's request is simple video content or trailer content of game content rather than advertising content or game content, there is no need to request deep link information for such content.

In operation 1320, the display apparatus 100 may determine whether the type of media content is a game category. When the type of media content is not a game category, the method may be concluded without further performing a deep link information obtainment operation. When it is determined in operation 1320 that the type of media content is a game category, the display apparatus 100 may perform operation 1330 of requesting deep link information about the media content being played from the content providing server 300.

In operation 1340, the display apparatus 100 may receive deep link information for the media content from the content providing server 300.

In operation 1350, the display apparatus 100 may obtain deep link information for accessing the media content from the content providing server 300. The deep link information for the media content may include, for example, content identification information, a URL for accessing the media content, and a thumbnail image of the media content or a URL for accessing the thumbnail image, as described above with reference to FIG. 7.

In operation 1360, the display apparatus 100 may provide a deep link item allowing direct access to the media content to the gaming hub UI, based on the deep link information received from the content providing server 300. For example, the display apparatus 100 may display the deep link items 1040 on the gaming hub UI 1000 as described with reference to FIG. 10. In other words, the display apparatus 100 may include a thumbnail image of the media content in a deep link item displayed in a portion of the gaming hub UI 1000, and may link the URL of the media content to the deep link item to thereby provide a deep link for the media content.

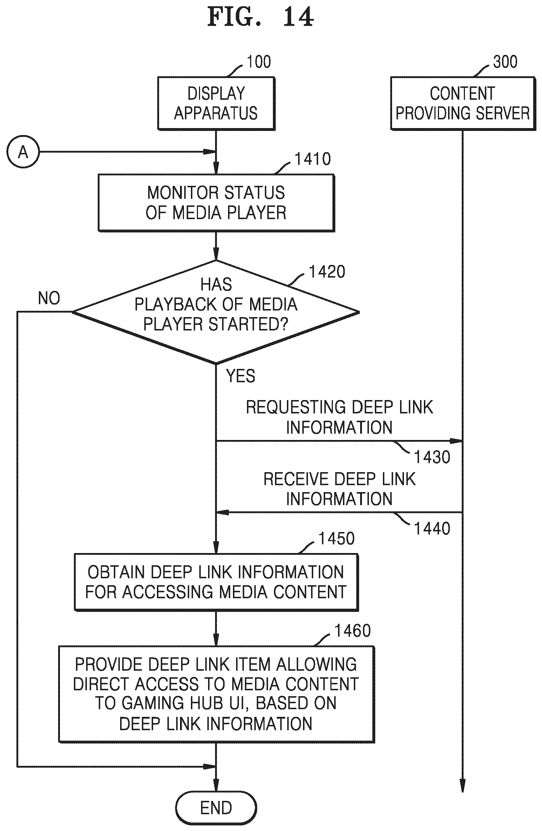

FIG. 14 is a flowchart of an example of a method, performed by the display apparatus 100, of obtaining deep link information, according to an embodiment of the disclosure.

Referring to FIG. 14, in operation 1410, the display apparatus 100 may monitor the status of the media player. For example, the display apparatus 100 may check the status of the media player by monitoring each stage of a media player pipeline as shown in FIG. 12.

In operation 1420, the display apparatus 100 may determine whether playback by the media player has started. For example, the display apparatus 100 may determine whether playback by the media player has started, based on whether data is consumed in the video sink 1250 and the audio sink 1260 in the media player pipeline 1200 as shown in FIG. 12. This is to find out a time point when playback by the media player actually starts. There is a case where the media player is created and only ready to play but then stops without actually "starting play". In this case, a game has not been actually played, so, when playback by the media player ends without starting playback, there may be no need to perform a link information obtainment operation. For example, the media player may be implemented to be prepared in advance for specific game content, and, when the user quits the game without starting the game, playback by the media player may also end before the playback begins. Therefore, the display apparatus 100 may determine a state in which playback by the media player has started, and, only when playback by the media player has started, may perform an operation of obtaining deep link information.

When it is determined in operation 1420 that playback by the media player does not start but ends, the display apparatus 100 may proceed to termination without further performing the deep link information obtainment operation.

When it is determined in operation 1420 that playback by the media player has started, the display apparatus 100 may perform operation 1430 of requesting deep link information about the media content being played from the content providing server 300.

In operation 1440, the display apparatus 100 may receive deep link information for the media content from the content providing server 300.

In operation 1450, the display apparatus 100 may obtain deep link information for accessing the media content from the content providing server 300. The deep link information for the media content may include, for example, content identification information, a URL for accessing the media content, and a thumbnail image of the media content or a URL for accessing the thumbnail image, as described above with reference to FIG. 7.

In operation 1460, the display apparatus 100 may provide a deep link item allowing direct access to the media content to the gaming hub UI, based on the deep link information received from the content providing server 300. For example, the display apparatus 100 may display the deep link items 1040 on the gaming hub UI 1000 as described with reference to FIG. 10. In other words, the display apparatus 100 may include a thumbnail image of the media content in a deep link item displayed in a portion of the gaming hub UI 1000, and may link the URL of the media content to the deep link item to thereby provide a deep link for the media content.

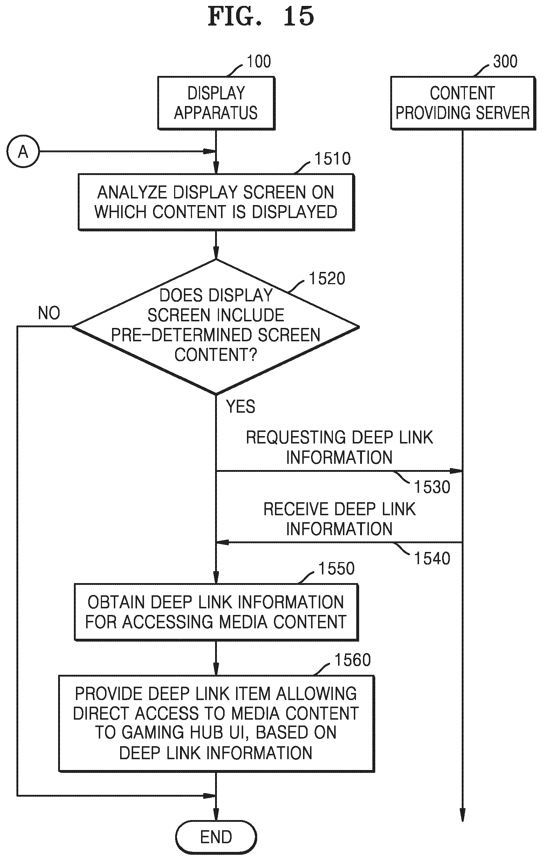

FIG. 15 is a flowchart of an example of a method, performed by the display apparatus 100, of obtaining deep link information, according to an embodiment of the disclosure.

Referring to FIG. 15, in operation 1510, the display apparatus 100 may analyze a display screen on which content is displayed by playback by the media player. The display apparatus 100 may analyze the display screen by using various screen analysis technologies. For example, the display apparatus 100 may analyze the display screen by using a neural network model trained to analyze the display screen.

In operation 1520, the display apparatus 100 may determine whether the display screen includes a pre-determined screen content through the display screen analysis. For example, the pre-determined screen content may refer to a screen content that may be determined to have entered an actual game content screen. An execution screen of media content such as a game may include, for example, a settings UI screen, a menu UI screen, a logo display screen, and an actual content image screen. The display apparatus 100 may analyze a displayed image screen, and may determine that actual content execution begins, when the menu UI screen or logo display screen is switched to the actual content image screen.

The analysis of the display screen is to provide a deep link for media content consumed by the user to the display apparatus 100, by analyzing a reproduced screen and using entering an actual game screen within game content as a basis for a game start, rather than simply identifying a time point when playback in the media player begins. For example, when playback in the media player has started by the user starting playing a game within a cloud game, but is terminated while viewing only a game standby screen or logo screen, it may be difficult to consider that the game has been played. Therefore, there is no need to provide a deep link for game content that has been played as described above, so it may be more accurately determined whether the actual game content has been played, by determining whether the actual game content screen is included as a pre-determined screen content, through the display screen analysis.

When it is determined in operation 1520 that the display screen includes no pre-determined screen content and playback by the media player ends, the display apparatus 100 may proceed to termination without further performing the deep link information obtainment operation.

When it is determined in operation 1520 that the display screen includes a pre-determined screen content, the display apparatus 100 may perform operation 1530 of requesting deep link information about the media content being played from the content providing server 300.

In operation 1540, the display apparatus 100 may receive deep link information for the media content from the content providing server 300.

In operation 1550, the display apparatus 100 may obtain deep link information for accessing the media content from the content providing server 300. The deep link information for the media content may include, for example, content identification information, a URL for accessing the media content, and a thumbnail image of the media content or a URL for accessing the thumbnail image, as described above with reference to FIG. 7.

In operation 1560, the display apparatus 100 may provide a deep link item allowing direct access to the media content to the gaming hub UI, based on the deep link information received from the content providing server 300. For example, the display apparatus 100 may display the deep link items 1040 on the gaming hub UI 1000 as described with reference to FIG. 10. In other words, the display apparatus 100 may include a thumbnail image of the media content in a deep link item displayed in a portion of the gaming hub UI 1000, and may link the URL of the media content to the deep link item to thereby provide a deep link for the media content.

Conditions determined by the display apparatus 100 to actually request deep link information have been described above with reference to FIGS. 13 through 15. In other words, even when the display apparatus 100 has reached the stage of creating a media player, the display apparatus 100 actually starts a deep link information requesting operation when additional conditions are satisfied, thereby more precisely performing the deep link information requesting operation for media content whose deep link deserves to be stored.

According to an embodiment of the disclosure, the display apparatus 100 may determine whether to perform the deep link information request operation by performing the determinations shown in FIGS. 13 through 15.

According to an embodiment of the disclosure, the display apparatus 100 may combine one or more of the three determinations shown in FIGS. 13 through 15 or perform all of the three determinations, and, when all of the three conditions are satisfied, may perform the deep link information request operation.

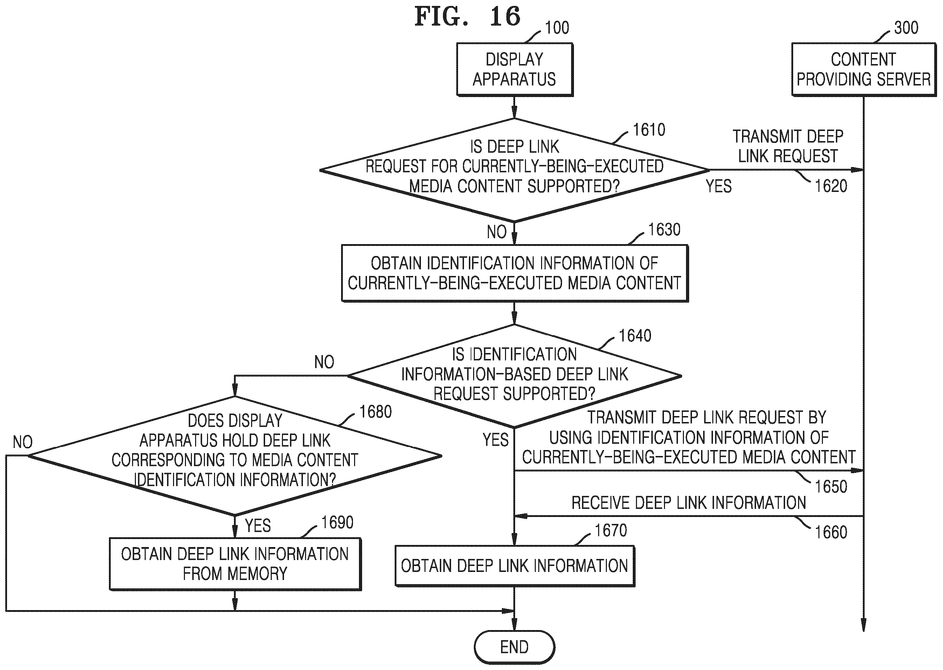

FIG. 16 is a flowchart of an example of a method, performed by the display apparatus 100, of requesting and receiving deep link information, according to an embodiment of the disclosure.

Referring to FIG. 16, in operation 1610, the display apparatus 100 may determine whether a deep link request for currently-being-executed media content is supported. When a deep link request for media content currently being executed between the display apparatus 100 and the content providing server 300 is defined using an API, the display apparatus 100 may determine that the deep link request for media content currently being executed is supported. When the deep link request for the currently-being-executed media content is supported, the method may proceed to operation 1620. On the other hand, when the deep link request for the currently-being-executed media content is not supported, the method may proceed to operation 1630.

In operation 1620, the display apparatus 100 may transmit the deep link request for the currently-being-executed media content to the content providing server 300. In operation 1660, in response to such a deep link request, the display apparatus 100 may receive deep link information for the currently-being-executed media content from the content providing server 300.

In operation 1630, the display apparatus 100 may obtain identification information of the currently-being-executed media content. For example, the display apparatus 100 may parse metadata about media content received from the content providing server 300 to obtain identification information of the media content. The identification information of the media content may include a title name or a game ID.

In operation 1640, the display apparatus 100 may determine whether an identification information-based deep link request is supported. In other words, the display apparatus 100 may determine whether transmission of the deep link request along with the identification information of the media content has been prearranged with the content providing server 300. When the identification information-based deep link request is supported, the method may proceed to operation 1650. On the other hand, when the identification information-based deep link request is not supported, the method may proceed to operation 1680.

In operation 1650, the display apparatus 100 may transmit the deep link request together with the identification information of the currently-being-executed media content to the content providing server 300.

In operation 1660, the display apparatus 100 may receive deep link information for accessing the currently-being-executed media content from the content providing server 300.

In operation 1670, the display apparatus 100 may obtain deep link information by receiving deep link information from the content providing server 300.

In operation 1680, the display apparatus 100 may determine whether the display apparatus 100 itself holds a deep link corresponding to the media content identification information. In other words, when the display apparatus 100 is unable to transmit a deep link information request for the currently-being-executed media content to the content providing server 300, the display apparatus 100 may determine whether deep link information for the media content is stored in the memory of the display apparatus 100.

When the display apparatus 100 itself holds the deep link information, the display apparatus 100 may obtain the deep link information from the memory, in operation 1690.

When the display apparatus 100 itself does not hold the deep link information, the method may be concluded.

According to an embodiment of the disclosure, the display apparatus 100 may obtain a fingerprint from content displayed on a display by using content fingerprinting (digital fingerprinting) as one of automatic content recognition, which is a technology capable of recognizing content that is displayed on the display. The display apparatus 100 may extract the fingerprint from the content displayed on the display, and send the extracted fingerprint to a fingerprint server that operates a fingerprint database. The fingerprint server may identify content displayed on the display apparatus 100, by matching the fingerprint received from the display apparatus 100 with a fingerprint stored in the fingerprint database. Then, the fingerprint server may provide the deep link information as information about the identified content to the display apparatus 100. According to an example, such a fingerprint server may be operated as a separate server that manages content information or may be included in the content providing server 300.

According to various embodiments as described above, the display apparatus 100 may obtain deep link information and provide the obtained deep link information to the gaming hub UI 1000 as shown in FIG. 10. When displaying deep link items on the gaming hub UI 1000, the display apparatus 100 may display a pre-determined number of deep link items.

According to an embodiment of the disclosure, when displaying the deep link items on the gaming hub UI 1000, the display apparatus 100 may display a pre-determined number of deep link items based on an order of items of recently-played media content, display a pre-determined number of deep link items based on the frequency of most played media content, or display deep link items for media content designated by the user.

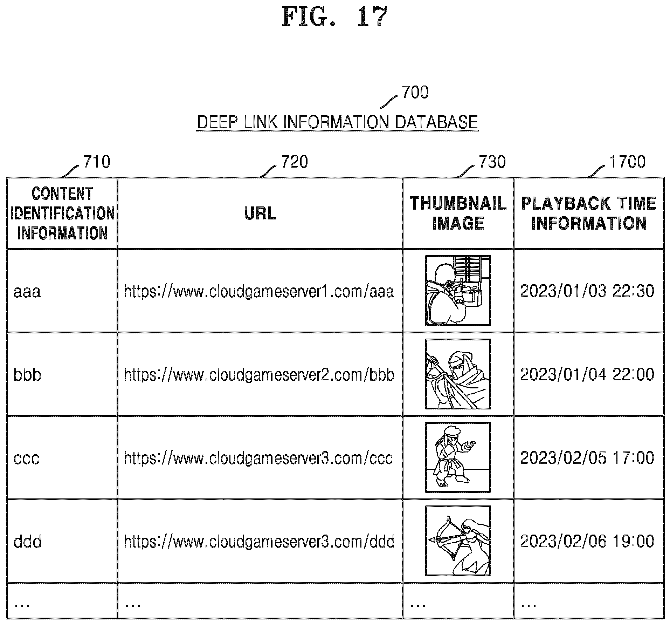

FIG. 17 is a reference diagram for explaining a method of displaying a pre-determined number of deep link items, based on the order of items of recently played media content, according to an embodiment of the disclosure.

According to an embodiment of the disclosure, the display apparatus 100 may store playback time information 1700 when storing deep link information corresponding to media content reproduce by the display apparatus 100, in the deep link information database 700. When determining a pre-determined number of deep link items to be displayed on a gaming hub UI, the display apparatus 100 may select media content to be displayed as deep link items, based on the playback time information 1700. In other words, the display apparatus 100 may display deep link items, based on deep link information corresponding to a pre-determined number of items of most recently played media content among pieces of deep link information stored in the deep link information database. For example, referring to FIG. 17, when the pre-determined number of deep link items to be displayed in the gaming hub UI is 3, the display apparatus 100 may select items of content bbb, ccc, and ddd as media content to be provided as deep link items in the order of items of most recently played media content among the deep link information stored in the deep link information database 700. Due to this provision of deep link items in the order of items of recently played media content, the user may provide a direct link for media content that the user has played more recently.

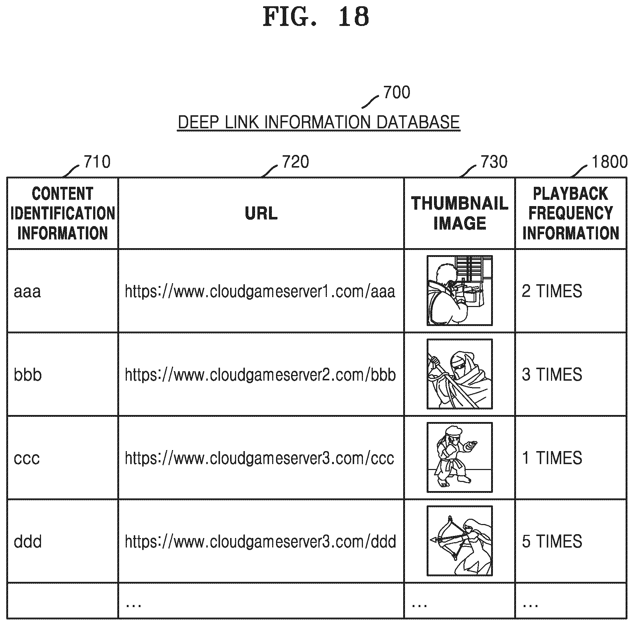

FIG. 18 is a reference diagram for explaining a method of displaying a pre-determined number of deep link items, based on the order of items of frequently played media content, according to an embodiment of the disclosure.

According to an embodiment of the disclosure, the display apparatus 100 may store playback frequency information when storing deep link information corresponding to media content reproduce by the display apparatus 100, in the deep link information database 700. When determining a pre-determined number of deep link items to be displayed on a gaming hub UI, the display apparatus 100 may select media content to be displayed as deep link items, based on the playback frequency information. In other words, the display apparatus 100 may display deep link items, based on deep link information corresponding to a pre-determined number of items of frequently played media content among pieces of deep link information stored in the deep link information database. For example, referring to FIG. 18, when the pre-determined number of deep link items to be displayed in the gaming hub UI is 3, the display apparatus 100 may select items of content aaa, bbb, and ddd as media content to be provided as deep link items in the order of items of most frequently played media content among the deep link information stored in the deep link information database 700. Due to this provision of deep link items in the order of items of frequently played media content, the user may provide a direct link for media content that the user has played more frequently.

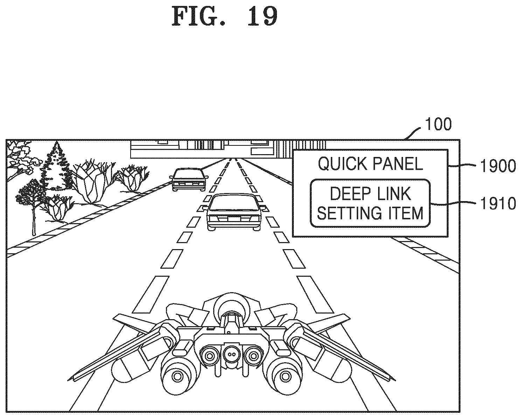

FIG. 19 is a reference diagram for explaining a method of displaying a deep link item, based on a user's designation, according to an embodiment of the disclosure.

According to an embodiment of the disclosure, the display apparatus 100 may display a deep link item on a gaming hub UI, based on a user input for selecting media content to be displayed on the deep link item.

According to an embodiment of the disclosure, the display apparatus 100 may receive a user input specifying the media content to be displayed via the deep link item by using a quick panel 1900.

The quick panel 1900 is a UI element that provides accesses to frequently-used features or options within a game, and may include a shortcut to a menu within various games(such as, settings, an inventory, or a map), important information, and a status update (such as, a player's score or level). The quick panel 1900 is intended to allow users to quickly and conveniently access certain menus without having to navigate complex menus or a screen.

The display apparatus 100 may display the quick panel 1900 on the display according to a user input allowing the quick panel 1900 to be displayed while media content is being played. The quick panel 1900 may include a deep link setting item 1910 enabling to set a deep link for currently-being-played media content. In response to a user input for selecting the deep link setting item 1910, the display apparatus 100 may determine that a deep link item for the media content currently being played on the display apparatus 100 is displayed on a gaming hub UI.

According to an embodiment of the disclosure, a method of operating a display apparatus may include displaying a media content home UI including an item that enables access to the content providing server 300.

According to an embodiment of the disclosure, the method of operating a display apparatus may include connecting to the content providing server 300 according to an input for selecting the item and displaying a server home UI provided by the content providing server 300.

According to an embodiment of the disclosure, the method of operating a display apparatus may include generating a media player for playing back the media content received from the content providing server in response to an input of requesting execution of media content through the server home UI.

According to an embodiment of the disclosure, the method of operating a display apparatus may include obtaining deep link information for accessing the media content being played back, while the media content received from the content providing server is being played using the generated media player.

According to an embodiment of the disclosure, the method of operating a display apparatus may include providing a deep link item allowing direct access to the media content to the media content home UI, based on the obtained deep link information.

According to an embodiment of the disclosure, the method of operating a display apparatus may further include obtaining the deep link information by requesting the content providing server for deep link information for access to the media content being played and receiving the deep link information from the content providing server.

According to an embodiment of the disclosure, the method of operating a display apparatus may further include obtaining a media content identifier, based on information corresponding to the media content being played, and obtaining the deep link information by requesting the content providing server for deep link information for the media content identifier and receiving the deep link information from the content providing server.

According to an embodiment of the disclosure, the method of operating a display apparatus may further include obtaining the information corresponding to the media content being played from metadata of the media content or obtaining the information corresponding to the media content being played by analyzing a content screen displayed on the display due to playback by the media player.

According to an embodiment of the disclosure, the method of operating a display apparatus may further include identifying whether playback by the media player starts, and, as it is identified that playback by the media player starts, requesting the content providing server for deep link information for accessing the media content being played.

According to an embodiment of the disclosure, the method of operating a display apparatus may further include identifying whether a content screen displayed on the display through playback by the media player includes pre-determined screen contents, and, when it is identified that the content screen includes the pre-determined screen contents, requesting the content providing server for the deep link information for accessing the media content being played.

According to an embodiment of the disclosure, the method of operating a display apparatus may further include identifying whether the type of the media content is a pre-determined type, and, as the type of the media content is identified as the pre-determined type, requesting the content providing server for deep link information for access to the media content being played.

According to an embodiment of the disclosure, the deep link information may include a URL for accessing the media content and an identifier of the media content, and may include a thumbnail image of the media content or a link for accessing the thumbnail image.

According to an embodiment of the disclosure, the method of operating a display apparatus may further include displaying one or more deep link items on the media content home UI, based on at least one of the order of items of recently-played media content, the order of items of frequently-played media content, or content designated as user preference.

One or more embodiments may also be embodied as a storage medium including instruction codes executable by a computer such as a program module executed by the computer. The computer-readable medium can be any available medium which can be accessed by the computer and includes all volatile/non-volatile and removable/non-removable media. Computer-readable media may also include computer storage media. The computer storage medium includes all volatile/non-volatile and removable/non-removable media embodied by a method or technology for storing information such as computer readable instruction code, a data structure, a program module or other data.

One or more embodiments may be implemented as an S/W program including instructions stored in computer-readable storage media.

A computer is a device capable of calling stored instructions from a storage medium and operating according to an embodiment of the disclosure according to the called instructions, and may include the electronic devices according to an embodiment of the disclosure.

The computer-readable storage medium may be provided as a non-transitory storage medium. Here, 'non-transitory' means that the storage medium does not include a signal and is tangible, but does not distinguish whether data is stored semi-permanently or temporarily in the storage medium.

Control methods according to an embodiment of the disclosure may be provided in a computer program product. The computer program product, which is a commodity, may be traded between sellers and buyers.

The computer program product may include a software (S/W) program and a computer-readable storage medium having the S/W program stored thereon. For example, the computer program product may include a product in the form of a software program (e.g., a downloadable app) that is electronically distributed through the manufacturer of a device or an electronic market (e.g., Google Play Store, AppStore). For electronic distribution, at least a portion of the S/W program may be stored on a storage medium or may be created temporarily. In this case, the storage medium may be a server of a manufacturer, a server of an electronic market, or a storage medium of a relay server for temporarily storing an SW program.

The computer program products may include, in a system including a server and a device, a storage medium of the server or a storage medium of the device. Alternatively, if there is a third device (e.g., a smartphone) in communication with the server or device, the computer program product may include a storage medium of the third device. Alternatively, the computer program product may include the software program itself transmitted from the server to the device or the third device, or transmitted from the third device to the device.

In this case, one of the server, the device, and the third device may execute the computer program product to perform the methods according to an embodiment of the disclosure. Alternatively, at least two of the server, the device, and the third device may execute the computer program product to distribute and perform the methods according to an embodiment of the disclosure.

For example, a server (e.g., a cloud server or an AI server) may execute a computer program product stored on a server to control a device communicating with the server to perform the methods according to an embodiment of the disclosure.

As another example, a third device may execute a computer program product to control a device in communication with the third device to perform the methods according to an embodiment of the disclosure. When the third device executes the computer program product, the third device may download the computer program product from the server and execute the downloaded computer program product. Alternatively, the third device may execute a computer program product provided in a preloaded state to perform methods according to an embodiment of the disclosure.

The terminology "~unit" used herein may be a hardware component such as a processor or a circuit, and/or a software component that is executed by a hardware component such as a processor.

While the disclosure has been shown and described with reference to one or more embodiments thereof, it will be understood that various changes in form and details may be made therein without departing from the spirit and scope of the disclosure. Thus, the above-described embodiments should be considered in descriptive sense only and not for purposes of limitation. For example, each component described as a single type may be implemented in a distributed manner, and similarly, components described as being distributed may be implemented in a combined form.

The scope of the disclosure is indicated by the scope of the claims to be described later rather than the above detailed description, and all changes or modified forms derived from the meaning and scope of the claims and the concept of equivalents thereof should be interpreted as being included in the scope of the disclosure.

## Claims

1. A display apparatus 100 comprising:
a display 120;
a communication interface 110;
a memory 130 storing one or more instructions; and
a processor 140 operatively connected to the display and the communication interface and configured to execute the one or more instructions 130 to:
display, on the display, a first user interface including an item enabling connection to a content providing server 300;
based on an input for selecting the item, connect to the content providing server through the communication interface 300 display, on the display, a second user interface provided by the content providing server 300;
generate a media player for playing media content received from the content providing server through the communication interface based on an input of requesting execution of the media content through the second user interface;
obtain deep link information for accessing the media content being played back, while the media content is being played back by using the media player; and
provide a deep link item enabling direct access to the media content to the first user interface, based on the obtained deep link information.

2. The display apparatus 100 of claim 1, wherein the processor 140 is further configured to execute the one or more instructions to obtain the deep link information by requesting the content providing server to provide the deep link information for access to the media content being played and receiving the deep link information from the content providing server through the communication interface.

3. The display apparatus 100 of claim 1, wherein the processor 140 is further configured to execute the one or more instructions to:
obtain a media content identifier, based on information corresponding to the media content being played; and
obtain the deep link information by requesting the content providing server to provide the deep link information for the media content identifier and receiving the deep link information from the content providing server through the communication interface.

4. The display apparatus 100 of claim 3, wherein the processor 140 is further configured to execute the one or more instructions to:
obtain the information corresponding to the media content being played from metadata of the media content; or
obtain the information corresponding to the media content, by analyzing a content screen displayed on the display due to playback by the media player.

5. The display apparatus 100 of claim 3, wherein the processor 140is further configured to execute the one or more instructions to:
check whether the memory stores the deep link information corresponding to the media content identifier; and
obtain the deep link information from the memory.

6. The display apparatus 100 of any one of claims 1 through 5, wherein the processor 140 is further configured to execute the one or more instructions to:
identify whether playback by the media player begins; and
based on playback by the media player being identified to begin, request the content providing server to provide the deep link information for access to the media content being played.

7. The display apparatus 100 of any one of claims 1 through 6, wherein the processor is further configured to execute the one or more instructions to:
identify whether a content screen displayed on the display by playback by the media player includes pre-determined screen content; and
based on the content screen being identified to include the pre-determined screen content, request the content providing server to provide the deep link information for access to the media content being played.

8. The display apparatus 100 of any one of claims 1 through 7, wherein the processor is further configured to execute the one or more instructions to:
identify whether a type of the media content is a pre-determined type; and
based on the type of the media content being identified to be the pre-determined type, request the content providing server to provide the deep link information for access to the media content being played.

9. The display apparatus 100 of any one of claims 1 through 8, wherein the deep link information includes at least one of a uniform resource locator (URL) for accessing the media content, an identifier of the media content, a thumbnail image of the media content, or a link for accessing the thumbnail image of the media content.

10. The display apparatus 100 of any one of claims 1 through 9, wherein the processor is further configured to execute the one or more instructions to display one or more deep link items on the first user interface, based on at least one of an order of items of recently-played media content, an order of items of frequently-played media content, or content designated as a user preference.

11. A method of operating a display apparatus 100, the method comprising:
displaying, on a display of the display apparatus, a first user interface including an item enabling connection to a content providing server 300;
based on an input for selecting the item, connecting to the content providing server;
displaying, on the display, a second user interface provided by the content providing server 300;
generating a media player for playing media content received from the content providing server based on an input of requesting execution of the media content through the second user interface;
obtaining deep link information for accessing the media content being played back, while the media content is being played back by using the media player; and
providing a deep link item enabling direct access to the media content to the first user interface, based on the deep link information.

12. The method of claim 11, further comprising obtaining the deep link information by requesting the content providing server to provide the deep link information for access to the media content being played and receiving the deep link information from the content providing server.

13. The method of claim 11, further comprising:
obtaining a media content identifier, based on information corresponding to the media content being played; and
obtaining the deep link information by requesting the content providing server to provide the deep link information for the media content identifier and receiving the deep link information from the content providing server.

14. The method of claim 13, further comprising obtaining the information corresponding to the media content being played from metadata of the media content or obtaining the information corresponding to the media content being played by analyzing a content screen displayed on the display due to playback by the media player.

15. A non-transitory computer-readable medium storing one or more instructions which, when executed by a processor of a display apparatus, cause the display apparatus to:
display a first user interface including an item enabling connection to a content providing server 300;
based on an input for selecting the item, connect to the content providing server;
display a second user interface provided by the content providing server 300;
generate a media player for playing media content received from the content providing server based on an input of requesting execution of the media content through the second user interface;
obtain deep link information for accessing the media content being played back, while the media content is being played back by using the media player; and
provide a deep link item enabling direct access to the media content to the first user interface, based on the deep link information.
